# EUROPÄISCHE PATENTSCHRIFT

(11) **EP 2 002 766 B1**
(45) Veröffentlichungstag und Bekanntmachung des Hinweises auf die Patenterteilung: **16.09.2009**
(21) Anmeldenummer: 08009359.4
(22) Anmeldetag: 21.05.2008
(51) Int. Cl.: A47J 31/44

(54) **Getränkezubereitungsgerät**
Drink preparation device
Appareil de préparation de boissons

(30) Priorität: 15.06.2007 DE 202007008590 U
(43) Veröffentlichungstag der Anmeldung: 17.12.2008
(73) Patentinhaber: Eugster/Frismag AG, 8590 Romanshorn (CH)
(72) Erfinder: Gehrig, Max, 9306 Freidorf TG (CH)
(74) Vertreter: Schubert, Siegmar

(56) Entgegenhaltungen:
- EP-A- 1 762 163
- DE-A1- 2 855 378
- DE-A1- 10 210 161

## Beschreibung

Die Erfindung betrifft ein Getränkezubereitungsgerät, insbesondere Kaffee- und/oder Espressomaschine, mit einem Gehäuse, aus dem eine Getränkeauslaufeinheit im Abstand über einem Fuß des Gehäuses herausragt, wobei auf dem Fuß ein Aufnahmegefäß in einer Getränkeaufnahmeposition positionierbar ist.

Derartige Getränkezubereitungsgeräte sind aus der Praxis vielfältig bekannt, auch mit einer Beleuchtung der Fußoberfläche, in der sich eine Getränkeaufnahmeposition für ein das zubereitete Getränk aufnehmendes Aufnahmegefäß befindet (siehe EP-A-1762163 und DE-A-2855 378).

Im Unterschied zu einer Beleuchtung der Fußoberfläche liegt der vorliegenden Erfindung die Aufgabe zugrunde, dem Benutzer des Getränkezubereitungsgeräts eine Information an prominenter Stelle zu übermitteln, so dass dieser die Information praktisch zwangsläufig wahrnimmt.

Zur Lösung dieser Aufgabe weist das Getränkezubereitungsgerät die in dem Anspruch 1 angegebenen Merkmale auf.

Mit dem somit in dem Gehäuse oberhalb der Getränkeaufnahmeposition angeordneten Projektionssystem kann ein auf einem Symbol- oder Zeichenträger enthaltenes Symbol oder Zeichen im wesentlichen in der Getränkeaufnahmeposition abgebildet werden bzw. bevorzugt darüber in Soll-Füllhöhe des Getränks auf dem von dem Aufnahmegefäß bzw. Auffanggefäß aufgefangenen zubereiteten Getränk nach Anspruch 4. Die Soll-Füllhöhe kann fest vorgegeben werden und insbesondere auf die Oberfläche des Fußes bezogen sein. Damit kann der Benutzer des Getränkeaufbereitungsgeräts an auffälliger Stelle und ästhetisch ansprechend informiert werden. Es ist auch denkbar, das Projektionssystem mit den Einstellmitteln auszustatten, um die projizierte Information zu verändern.

Der Symbol- und Zeichenträger soll im Bereich der Symbole und Zeichen so hell sein, dass eine gut erkennbare Abbildung der Symbole und Zeichen auf der Oberfläche des Getränks abgebildet werden.

In unkomplizierter Weise kann eine lichtstarke Projektion gemäß Anspruch 2 mit einem durchleuchteten Diapositiv als Symbol- oder Zeichenträger erzielt werden, wozu in dem Projektionssystem eine Lichtquelle mit Kondensor auf der zu der Optik entgegengesetzten Seite des Symbol- oder Zeichenträgers angeordnet ist.

Zweckmäßig kann das optische Projektionssystem mit dem optischen Symbol- oder Zeichenträger nach Anspruch 3 zumindest teilweise in der Getränkeauslaufeinheit angeordnet sein. Mit dieser geschützten und ästhetisch ansprechenden Anordnung kann die Projektion in der Nähe eines Getränkeauslaufstutzens, also annähernd parallel zu diesem, weitgehend verzerrungsfrei auf der Oberfläche des zubereiteten Getränks erfolgen.

Wenn das Projektionssystem gemäß Anspruch 5 schwenkbar angeordnet ist, kann die Projektionsstelle auf der Oberfläche des von dem Aufnahmegefäß aufgenommenen Getränks genau eingestellt werden.

Ein Ausführungsbeispiel der Erfindung wird im folgenden anhand einer Zeichnung mit zwei Figuren beschrieben. Es zeigen:
- Figur 1: Eine Kaffee- und Espressomaschine in einer schaubildlichen Darstellung mit aufgesetztem Aufnahmegefäß und
- Figur 2: die Kaffee- und Espressomaschine gemäß Anspruch 1 in einer Seitenansicht, aus der ein Projektionssystem ersichtlich ist.

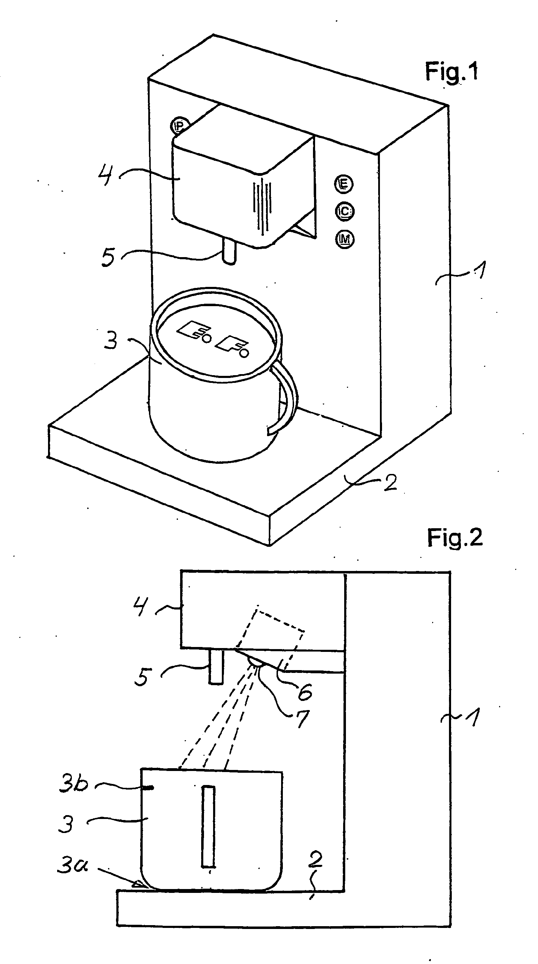

In den Figuren 1 und 2 ist mit 1 ein Gehäuse einer Kaffee- und Espressomaschine bezeichnet, welches unten in einen Fuß 2 übergeht. Auf dem Fuß ist ein Aufnahmegefäß 3 in einer Getränkeaufnahmeposition 3a aufgesetzt.

Aus dem Gehäuse 1 ragt oben eine Getränkeauslaufeinheit 4 hervor, aus der nach unten ein Ablaufrohr 5 für ein zubereitetes Getränk gerichtet ist. Die Getränkeaufnahmeposition 3a, in der das Auffanggefäß 3 abgestellt ist, befindet sich in einer wie dargestellt zentralen Stelle unterhalb des Ablaufrohrs 5.

Aus Figur 2 kann ersehen werden, wie ein optisches Projektionssystem 6 oberhalb des Fußes 2 und damit der Getränkeaufnahmeposition 3a an dem Gehäuse 1 und im wesentlichen innerhalb der Getränkeauslaufeinheit 4 angeordnet ist. In dem optischen Projektionssystem 6 befinden sich außer der abbildenden Optik 7 als Symbol- oder Schriftzeichenträger bevorzugt ein Diapositiv sowie auf der zu der Optik 7 entgegengesetzten Seite des Diapositivs eine Lichtquelle mit Kondensor, welche das Diapositiv durchleuchten, damit die Schriftzeichen oder Symbole des durchleuchteten Diapositivs in Richtung auf die Getränkeaufnahmeposition 3a projiziert werden, wie mit unterbrochenen Linien in Figur 2 angedeutet. Bevorzugt erfolgt die Projektion auf die Oberfläche bzw. eine Soll-Füllhöhe 3b des zubereiteten Getränks in dem Aufnahmegefäß 3. Das mit der Projektion erreichte Erscheinungsbild der Oberfläche des Getränks ist beispielhaft aus Figur 1 zu ersehen.

Die Projektion kann je nach Verdrahtung der Kaffee- und Espressomaschine durch Betätigung eines Netzschalters P bzw. einer der Getränkeauswahlschalter E, C, M für die Zubereitung von Espresso, Kaffee bzw. eines Milchgetränks initiiert werden und wird optimal, wenn das zubereitete Getränk die Soll-Füllhöhe 3b erreicht.

### Bezugszahlenliste

- 1: Gehäuse
- 2: Fuß
- 3: Aufnahmegefäß
- 3a: Getränkeaufnahmeposition
- 3b: Soll-Füllhöhe
- 4: Getränkeauslaufeinheit
- 5: Ablaufrohr
- 6: optisches Projektionssystem
- 7: Optik

## Patentansprüche

1. Getränkezubereitungsgerät, insbesondere Kaffee- und/oder Espresso-maschine, mit einem Gehäuse (1), aus dem oben eine Getränkeauslaufeinheit (4) im Abstand über einem Fuß (2) des Gehäuses herausragt, wobei auf dem Fuß ein Aufnahmegefäß (3) in einer Getränkeaufnahmeposition (3a) positionierbar ist,
**dadurch gekennzeichnet,**
**dass** an dem Gehäuse (1) oberhalb des Fußes (2) ein optisches Projektionssystem (6) angeordnet ist, welches einen Symbol- oder Zeichenträger sowie eine Optik (7) umfasst, die geeignet ist, den Symbol- oder Zeichenträger nach unten in Richtung auf die Getränkeaufnahmeposition (3a) zu projizieren.

2. Getränkezubereitungsgerät nach Anspruch 1,
**dadurch gekennzeichnet,**
**dass** der Symbol- oder Zeichenträger ein durchleuchtetes Diapositiv oder eine Kulisse ist, zu deren Durchleuchtung eine Lichtquelle mit Kondensor auf der zu der Optik (7) entgegengesetzten Seite des Symbol- oder Zeichenträgers angeordnet ist.

3. Getränkezubereitungsgerät nach Anspruch 1 oder 2,
**dadurch gekennzeichnet,**
**dass** das optische Projektionssystem (6) mit dem optischen Symbol- oder Zeichenträger zumindest teilweise in der Getränkeauslaufeinheit (4) angeordnet ist.

4. Getränkezubereitungsgerät nach einem der Ansprüche 1 - 3,
**dadurch gekennzeichnet,**
**dass** eine Abbildungsebene der Optik (7) auf eine Soll-Füllhöhe (3b) des Getränks in dem Aufnahmegefäß (3) eingestellt ist.

5. Getränkezubereitungsgerät nach einem der vorangehenden Ansprüche,
**dadurch gekennzeichnet,**
**dass** das Projektionssystem (6) schwenkbar angeordnet ist.

6. Getränkezubereitungsgerät nach einem der vorangehenden Ansprüche,
**dadurch gekennzeichnet,**
**dass** ein Schalter (P) vorgesehen ist, mit dem das Getränkezubereitungsgerät und das Projektionssystem (6) aktivierbar sind.

## Claims

1. Drink preparation device, particularly coffee and/or espresso machine, comprising a housing (1) from the top of which a drink outflow unit (4) is projecting at a distance above a foot (2) of said housing, a receiving pot (3) being positionable on said foot in a drink receiving position (3a),
**characterized in**
**that** on said housing (1), above said foot (2), an optical projection system (6) is provided comprising a symbol or picture carrier and an optical system (7) suited to project said symbol or picture carrier downward in the direction of said drink receiving position (3a).

2. Drink preparation device according to claim 1,
**characterized in**
**that** said symbol or picture carrier is a transilluminated slide or a coulisse for the transillumination of which a light source including a condenser is disposed on the side of the symbol or picture carrier opposed to said optical system (7).

3. Drink preparation device according to either claim 1 or 2,
**characterized in**
**that** said optical projection system (6) including said optical symbol or picture carrier is arranged, at least partly, in said drink inflow unit (4).

4. Drink preparation device according to one of claims 1 through 3,
**characterized in**
**that** one imaging plane of said optical system (7) is adjusted to a prespecified filling level (3b) in said receiving pot (3).

5. Drink preparation device according to one of the foregoing claims,
**characterized in**
**that** said projection system (6) is tiltingly disposed.

6. Drink preparation device according to one of the foregoing claims,
**characterized in**
**that** a switch (P) is provided by which said drink preparation device and said projection system (6) can be put in operation.

## Revendications

1. Appareil de préparation de boissons, en particulier machine à café et/ou espresso, comprenant un boîtier (1) duquel fait saillie, en haut, une unité de sortie de boissons (4) à une certaine distance au-dessus d'une base (2) du boîtier, un conteneur (3) pouvant être positionné sur la base dans une position de réception (3 a) des boissons,
**caractérisé en ce qu'**est disposé sur le boîtier (1) au-dessus de la base (2) un système de projection optique (6) qui comprend un porte-symbole ou porte-repère ainsi qu'un dispositif optique (7) approprié pour projeter le porte-symbole ou porte-repère vers le bas en direction de la position de réception (3a) des boissons.

2. Appareil de préparation de boissons selon la revendication 1,
**caractérisé en ce que** le porte-symbole ou porte-repère est une diapositive éclairée ou une coulisse dont l'éclairage par transparence est assuré par une source lumineuse à condenseur disposée sur le côté du porte-symbole ou porte-repère opposé au dispositif optique (7).

3. Appareil de préparation de boissons selon la revendication 1 ou 2,
**caractérisé en ce que** le système de projection optique (6) avec le porte-symbole ou porte-repère optique est disposé au moins en partie dans l'unité de sortie de boissons (4).

4. Appareil de préparation de boissons selon l'une des revendications 1 à 3,
**caractérisé en ce qu'**un plan de représentation du dispositif optique (7) est réglé sur un niveau de remplissage théorique (3b) de la boisson dans le conteneur (3).

5. Appareil de préparation de boissons selon l'une des revendications précédentes,
**caractérisé en ce que** le système de projection (6) est disposé de façon à pouvoir pivoter.

6. Appareil de préparation de boissons selon l'une des revendications précédentes,
**caractérisé en ce qu'**est prévu un commutateur (P) permettant d'activer l'appareil de préparation de boissons et le système de projection (6).
